# EUROPÄISCHE PATENTSCHRIFT

(11) **EP 0 598 208 B1**
(45) Veröffentlichungstag und Bekanntmachung des Hinweises auf die Patenterteilung: **16.12.1998**
(21) Anmeldenummer: 93115896.8
(22) Anmeldetag: 01.10.1993
(51) Int. Cl.: B23B 31/12

(54) **Selbstspannendes Bohrfutter**
Selfclamping drill chuck
Mandrin de forage autoserrant

(30) Priorität: 16.11.1992 DE 4238464
(43) Veröffentlichungstag der Anmeldung: 25.05.1994
(73) Patentinhaber: Röhm, Günter Horst, D-89567 Sontheim (DE)
(72) Erfinder: Röhm, Günter Horst, D-89567 Sontheim (DE)
(74) Vertreter: Fay, Hermann, Dipl.-Phys. Dr.

(56) Entgegenhaltungen:
- WO-A-91/12914
- FR-A- 2 011 130
- FR-A- 2 417 363

## Beschreibung

Die Erfindung betrifft ein selbstspannendes Bohrfutter zum Betrieb an einer Schlagbohrspindel, mit Futterbacken zum Einspannen eines Bohrwerkzeugs, einem die Futterbacken geneigt zur Futterachse führenden Backenführungsteil, ferner mit einem ein Spanngewinde zum Verstellen der Futterbacken tragenden, an die Schlagbohrspindel anschließbaren Futterkörper, wobei das Backenführungsteil drehbar am Futterkörper geführt und drehfest mit einem gegenüber dem Futterkörper axial unverschiebbaren Sperring verbunden ist, und mit einem die Nachspannung begrenzenden, am Futterkörper axial verschiebbar und zwischen Begrenzungsanschlägen verdrehbar geführten Haltering, der mit einem Zahnkranz unter der Kraft mindestens einer Sperrfeder axial in eine auf Seiten des Sperrings befindliche Gegenverzahnung greift und durch axiales Verschieben gegen die Kraft der Sperrfeder aus dem Verzahnungseingriff lösbar ist.

Selbstspannende Bohrfutter dieser Art sind in im übrigen verschiedenen Bauformen aus beispielsweise DE 34 32 918 C2 und DE 39 03 443 C1 bekannt. Um bei derartigen Bohrfuttern die Nachspannung zu begrenzen, um zum Beispiel eine zu starke Beeinträchtigung des Bohrerschafts durch ein Eingraben der Futterbacken oder eine zu starke innere Verspannung des Bohrfutters, die das Bohrfutter nur wieder schwer lösen ließe, zu vermeiden, ist der Haltering am Futterkörper nur zwischen zwei Begrenzungsanschlägen verdrehbar, die in Umfangsrichtung des Futterkörpers um den Nachspannweg auseinander liegen, der im Rahmen der Nachspannungsbegrenzung maximal zulässig sein soll. Zur Festlegung dieser beiden Grenzstellungen des Halterings ist bei dem aus DE 34 32 918 C2 bekannten Bohrfutter ein sich in Umfangsrichtung erstreckender Schlitz im Haltering und am Futterkörper ein Zapfen vorgesehen, der sich axial in den Schlitz erstreckt und durch Anschlag an den Schlitzenden die Halteringverdrehung beendet. Bei dem Bohrfutter nach DE 39 03 443 C1 dienen zur Festlegung der beiden Grenzstellungen des Halterings zwei achsenparallele, sich jeweils über den axialen Verschiebungsbereich des Halterings erstreckende Planflächen. Jeder dieser Planflächen stehen am Haltering zwei achsenparallele, zueinander schräge Planflächen gegenüber, die wechselweise an der jeweiligen Planfläche des Futterkörpers zur Anlage kommen und durch ihre gegenseitige Schrägstellung den Winkel bestimmen, um den der Haltering zum Nachspannen gegenüber dem Futterkörper maximal verdrehbar ist. In jedem Fall muß dabei darauf geachtet werden, daß sich der Haltering vor Beginn der Bohrarbeiten nicht nur in seiner den Sperring mit dem Backenführungsteil verriegelnden Axiallage, sondern hinsichtlich seiner Verdrehbarkeit auch in derjenigen Grenzstellung befindet, aus der heraus er sich im Sinne der Nachspannung in die andere Grenzstellung verdrehen kann, damit der Nachspannvorgang überhaupt möglich ist und dabei der Nachspannweg in ganzer Länge zur Verfügung steht. Der Haltering muß daher im allgemeinen zu seiner Einstellung sowohl in axialer Richtung als auch in Umfangsrichtung betätigt und außerdem muß dabei auf die richtige Ausgangsstellung des Halterings geachtet werden.

Im Ergebnis verlangt bei derartigen Bohrfuttern das Einstellen des Halterings Kenntnis, Aufmerksamkeit und Übung, was in Verbindung mit Bohrmaschinen, die überwiegend zum Gebrauch durch Laien bestimmt sind, keineswegs immer im gebotenen Umfang vorausgesetzt werden darf.

Alternativ ist es nach einer Ausführungsform der DE 34 32 918 A1 möglich, den Kupplungseingriff dadurch aufzuheben, daß sich der Haltering selbsttätig aus dem Kupplungseingriff heraushebt, wenn die Form der Zahnflanken und die Kraft der Kupplungsfeder entsprechend eingestellt sind. Dabei ist aber als Randbedingung zu beachten, daß ein selbsttätiges, gegenseitiges Verdrehen des Halterings gegenüber der drehfest mit dem Backenführungsteil verbundenen Verzahnung unter den Bedingungen des Schlagbohrens ausgeschlossen sein soll, wobei diesen Anforderungen nur weitgehend entsprochen werden kann, da beispielsweise beim Schlagbohren mit leistungsstarken Schlagbohrmaschinen oder an ihrer Leistungsgrenze betriebenen Schlagbohrmaschinen mit starken Erschütterungen während des Schlagbohrens die Wirkung der Nachspannbegrenzung aufgehoben werden kann, wenn der Haltering auf den diesbezüglich gestalteten Zahnflanken herausrutschen und sich jeweils um einen Zahn weiterverstellen kann. Damit ist ein sicherer Kupplungseingriff bzw eine sichere Nachspannbegrenzung nicht gewährleistet. Die Spannbacken können sich also zu fest in das Bohrwerkzeug eingraben, so daß dieses nicht mehr oder nur unter großen Schwierigkeiten gelöst werden kann.

Der Erfindung liegt die Aufgabe zugrunde, ein Bohrfutter der eingangs genannten Art so auszubilden, daß der Haltering in einfacher Weise ohne besondere Kenntnis und Aufmerksamkeit betriebssicher zwischen seinen verschiedenen Betriebseinstellungen verstellt werden kann.

Diese Aufgabe wird nach der Erfindung dadurch gelöst, daß die Gegenverzahnung an einem Zahnring ausgebildet ist, der koaxial am Sperring zwischen mindestens einem Sperranschlag und einer dem Sperranschlag zugeordneten Rückstellfeder begrenzt verdrehbar geführt ist, wobei die Rückstellfeder den Zahnring in derselben Drehrichtung gegen den Sperranschlag drückt wie die des Sperrings beim Spannen des Bohrfutters, daß die Zähne des Zahnkranzes am Haltering und der Gegenverzahnung am Zahnring Sägezahnform besitzen, wobei in der dem Spannen des Bohrfutters entsprechenden Drehrichtung des Sperrings die steile Zahnbrust der Zähne am Zahnring voran- und der Zähne am Haltering nachläuft und die schrägen Zahnrücken so geneigt sind, daß beim Verdrehen des Sperrings in der dem Spannen des Bohrfutters entgegen gesetzten Drehrichtung die Zähne des Zahnrings die Zähne des Halterings über die Zahnrücken gegen die Kraft der Sperrfeder aus dem Verzahnungseingriff herausdrücken, und daß zwischen dem Haltering und dem Futterkörper eine Steuereinrichtung vorgesehen ist, durch die der Haltering beim Verdrehen zwischen den Begrenzungsanschlägen gegen die Kraft der Sperrfeder verschiebbar ist, wobei in seinen beiden, das Ende seines maximal möglichen Verdrehungsweges bildenden Grenzstellungen der Haltering aus dem Verzahnungseingriff an der Gegenverzahnung gelöst ist, und wobei der maximal mögliche Verdrehungswinkel des Zahnrings gegenüber dem Sperring mindestens gleich dem Drehwinkel ist, den der Haltering in Bezug auf den Futterkörper in der dem Spannen des Bohrfutters entgegengesetzten Drehrichtung des Sperrings ausführen muß, um den dem Nachspannen zugeordneten Verdrehungsweg zu durchlaufen und anschließend noch von der Steuereinrichtung aus dem Verzahnungseingriff gelöst zu werden.

Der durch die Erfindung erreichte Vorteil besteht im wesentlichen darin, daß zur richtigen Handhabung und Einstellung des erfindungsgemäßen Bohrfutters allein das gegenseitige Verdrehen des Halterings und des Backenführungsteils genügt. Dabei werden dem Haltering durch die Steuereinrichtung automatisch diejenigen Bewegungen erteilt, die er axial und in Umfangsrichtung zwischen den verschiedenen Betriebseinstellungen ausführen muß. Das beim Einspannen eines Bohrers von Hand zum gegenseitigen Verdrehen des Halterings und des Backenführungsglieds aufgewandte Drehmoment kommt für die Bohrereinspannung voll zur Wirkung, ohne durch die Einrichtung zur Nachspannungsbegrenzung oder durch die Steuereinrichtung behindert zu werden. Andererseits steht nach erfolgter Bohrereinspannung zu Beginn des Bohrvorgangs der maximal mögliche Nachspannweg für die Nachspannung des Werkzeugs immer voll zur Verfügung. Im wesentlichen wird das bei dem erfindungsgemäßen Bohrfutter dadurch erreicht, daß der gegenüber dem Sperring begrenzt verdrehbare Zahnring auch bei zunächst noch bestehendem Verzahnungseingriff des Halterings schon ein Verdrehen des Backenführungsteils ermöglicht, bis durch die entsprechende Verdrehung des vom Backenführungsteil mitgenommenen Futterkörpers der Haltering aus dem Verzahnungseingriff gelöst ist und dann das Backenführungsteil gegenüber dem nun vom Haltering festgehaltenen Futterkörper unbehindert durch den Haltering weiter gedreht werden kann. Das Lösen des gespannten bzw. nachgespannten Bohrfutters erfolgt mit Hilfe der schrägen Zahnrücken, über die sich beim entsprechenden gegenseitigen Verdrehen des Backenführungsteils und des Halterings dieser und der Zahnring selbsttätig axial auseinanderdrücken und so den Verzahnungseingriff aufheben.

Eine aus Gründen konstruktiver Einfachheit bevorzugte Ausführungsform ist dadurch gekennzeichnet, daß der Sperring mehrere über den Ringumfang verteilte sektorförmige Ausnehmungen aufweist, in welchen der Zahnring mit entsprechenden sektorförmigen Vorsprüngen geführt ist, die in Umfangsrichtung um den Verdrehungsweg des Zahnrings gegenüber dem Sperring kürzer als dessen Ausnehmungen sind, wobei jeweils eine der beiden in Umfangsrichtung stirnseitigen Endflächen jeder Ausnehmung den Sperranschlag für den Vorsprung bildet und dieser am in Umfangsrichtung gegenüberliegenden Ende durch die dem Sperranschlag zugeordnete Rückstellfeder gegen den Sperring abgestützt ist.

Eine weiter bevorzugte Ausführungsform ist dadurch gekennzeichnet, daß die Steuereinrichtung von mindestens einer Steuerkurve am Haltering und mindestens einem beim Verdrehen des Halterings an der Steuerkurve sich entlang bewegenden, fest am Futterkörper sitzenden Tastkopf gebildet ist, wobei die Steuerkurve einen der Nachspannbewegung zugeordneten, sich in Umfangsrichtung erstreckenden, dem Haltering den Verzahnungseingriff ermöglichenden Kurvenabschnitt aufweist, an den sich einenends ein Nachspannungsbegrenzungsanschlag und andernends eine schräge Kurvenrampe anschließt, an der der Haltering vom Tastkopf aus dem Veriegelungseingriff gelöst wird und die zu einem der beiden Begrenzungsanschläge führt, welche den maximal möglichen Verdrehungsweg des Halterings gegenüber dem Futterkörper beenden. An diesem Begrenzungsanschlag sorgt der ihm anliegende Tastkopf dafür, daß der Futterkörper gegen Mitdrehen festgehalten wird, während das Backenführungsteil zum Einspannen des Bohrers verdreht und das volle Spanndrehmoment von Hand auf das Backenführungsteil ausgeübt wird. Damit anschließend an die erfolgte Einspannung sich der Verzahnungseingriff selbsttätig wieder einstellen kann, ist zweckmäßigerweise die Neigung der schrägen Kurvenrampe der Steuerkurve genügend steil, damit der ihr anliegende Tastkopf die Rückstellung des Halterings unter der Kraft der Sperrfeder in den Verzahnungseingriff nicht behindern kann, der Tastkopf dabei also an der Kurvenrampe abrutscht. - Um nach beendeter Nachspannung den Tastkopf in einfacher Weise aus seiner Anlage am Nachspannungsbegrenzungsanschlag befreien und das Bohrfutter insgesamt lösen zu können, empfiehlt sich eine Anordnung, die dadurch gekennzeichnet ist, daß die axiale Höhe des Nachspannungsbegrenzungsanschlags geringer als die gegenseitige Eingrifftiefe der Verzahnung und der Gegenverzahnung ist, und daß an den Nachspannungsbegrenzungsanschlag ein Kurvenflügel der Steuerkurve anschließt, an dem der Haltering vom Tastkopf aus dem Verzahnungseingriff gelöst ist und ein Rastsitz für den Tastkopf ausgebildet ist, wobei an diesen Rastsitz der zweite der den maximal möglichen Verdrehungsweg des Halterings beendenden Begrenzungsanschläge anschließt. Beim Aufheben des Verzahnungseingriffs kann dann der Tastkopf vom Nachspannungsbegrenzungsanschlag axial abrutschen und in den Rastsitz gelangen, so daß sich der Haltering unter der Kraft der Sperrfeder nicht selbsttätig in den Verzahnungseingriff zurückstellen kann, hierfür vielmehr eine gezielte Verdrehung im Sinne einer neuen Spannung des Bohrfutters erforderlich ist.

In weiterer Ausbildung der Erfindung besteht die Möglichkeit, daß anstelle der von der Steuerkurve gebildeten beiden, den maximal möglichen Verdrehungsweg des Halterings beendenden Begrenzungsanschläge oder zusätzlich zu ihnen eine weitere Anschlageinrichtung zwischen dem Haltering und dem Futterkörper vorgesehen ist, bestehend aus mindestens einer achsenparallelen Planfläche am Futterkörper und je zwei ihr gegenüberstehenden achsenparallelen und zueinander schrägen Planflächen am Haltering, wobei je nach Drehlage der Haltering mit einer seiner beiden Planflächen an der Planfläche des Futterkörpers zur Anlage kommt und der Winkel zwischen den beiden Planflächen des Halterings den maximal möglichen Verdrehungsweg zwischen dem Haltering und dem Futterkörper bestimmt.

Zweckmäßigerweise ist der Tastkopf als radial abstehender Nocken an einer verdrehungssicher auf dem Futterkörper aufgeschobenen Ringscheibe ausgebildet.

Im übrigen liegt es selbstverständlich im Rahmen der Erfindung, die Steuerkurve statt am Haltering am Futterkörper und entsprechend den Tastkopf statt am Futterkörper am Haltering vorzusehen.

Im folgenden wird die Erfindung an einem in der Zeichnung dargestellten Ausführungsbeispiel näher erläutert; es zeigen:
- Fig. 1: einen Axialschnitt durch ein selbstspannendes Bohrfutter nach der Erfindung,
- Fig. 2: den Schnitt II - II durch das Bohrfutter nach Fig. 1,
- Fig. 3: den Schnitt III - III durch das Bohrfutter nach Fig. 1,
- Fig. 4: den Schnitt IV - IV durch das Bohrfutter nach Fig. 1, und
- Fig. 5: den Schnitt V - V durch das Bohrfutter der Fig. 1 in einer Abwicklung längs des Futterumfangs, und zwar in den Teilfig. 5a bis 5d für verschiedene Betriebszustände des Bohrfutters in teils schematischer Darstellung.

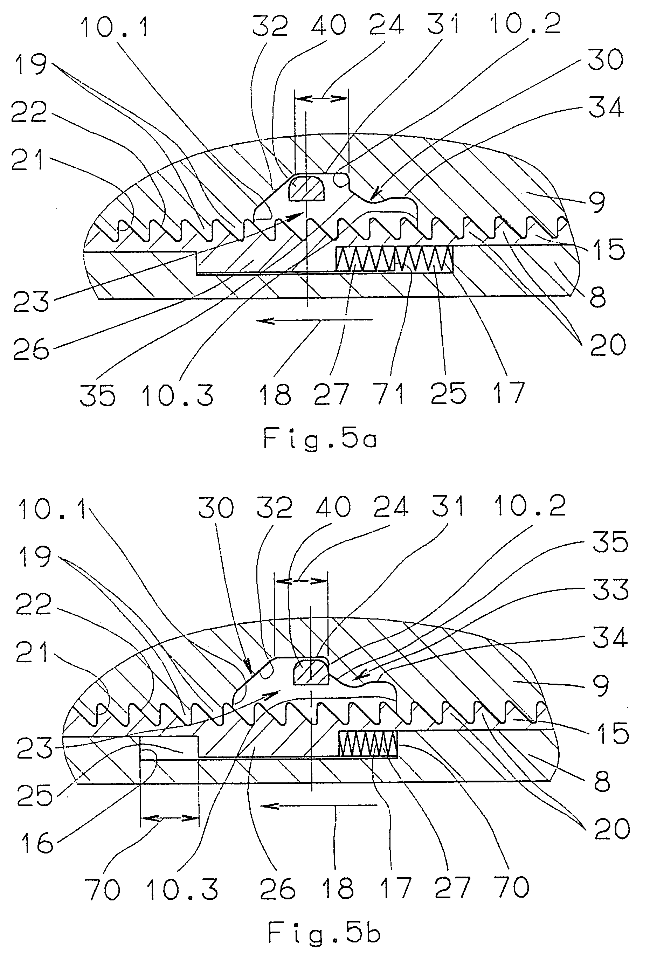

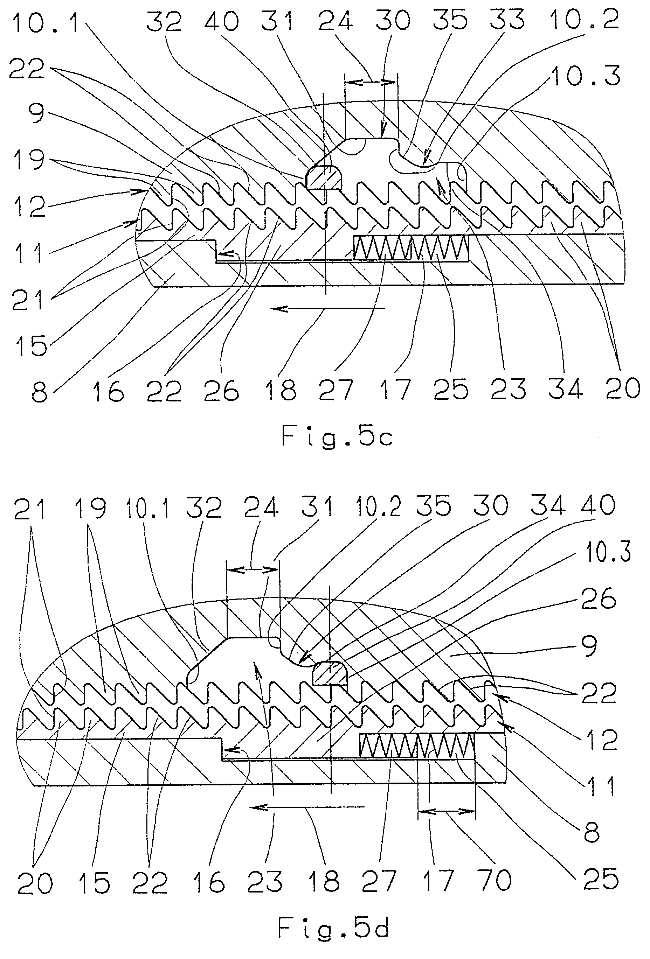

Das in der Zeichnung dargestellte selbstspannende Bohrfutter ist zum Betrieb an einer selbst nicht dargestellten Schlagbohrspindel bestimmt. Die Einspannung des ebenfalls nicht dargestellten Bohrers erfolgt zwischen Futterbacken 1, die geneigt zur Futterachse in Bohrungen 3 eines Backenführungsteils 2 verschiebbar geführt sind. Zu ihrer Verstellung greifen die Futterbacken 1 mit einer Verzahnung 4 in ein konisches Spanngewinde 5, das an einem an die Schlagbohrspindel mit einer Aufnahme 6 anschließbaren Futterkörper 7 ausgebildet ist. Das Backenführungsteil 2 ist drehbar und axial unverschiebbar am Futterkörper 7 geführt und besitzt einen fest mit ihm verbundenen Sperring 8, der dank seiner festen Verbindung mit dem Backenführungsteil 2 wie dieses gegenüber dem Futterkörper 7 verdrehbar und axial unverschiebbar ist. Ferner ist ein die Nachspannung begrenzender Haltering 9 vorgesehen, der am Futterkörper 7 axial verschiebbar und zwischen verschiedenen Begrenzungsanschlägen 10.1, 10.2, 10.3 verdrehbar geführt ist. Von diesen Begrenzungsanschlägen sind insgesamt drei vorhanden, nämlich zwei den maximal möglichen Verdrehungsweg des Halterings 9 gegenüber dem Futterkörper 7 beendende Begrenzungsanschläge 10.1, 10.3 und ein weiterer, in noch zu beschreibender Weise die Nachspannung beendender Begrenzungsanschlag 10.2. Der Haltering 9 greift mit einem Zahnkranz 12 unter der Kraft mehrerer Sperrfedern 13 axial in eine auf Seiten des Sperrings 8 befindliche Gegenverzahnung 11. Durch axiales Verschieben des Halterings 9 gegen die Kraft der an einem am Futterkörper 7 festen Ring 14 abgestützten, als Schraubendruckfedern ausgebildeten Sperrfedern 13 kann der Verzahnungseingriff gelöst werden. Die Gegenverzahnung 11 ist an einem Zahnring 15 ausgebildet, der koaxial am Sperring 8 zwischen mehreren Sperranschlägen 16 und den Sperranschlägen 16 jeweils zugeordneten Rückstellfedern 17 begrenzt verdrehbar geführt ist. Dabei drücken die Rückstellfedern 17 den Zahnring 15 in derselben Drehrichtung gegen die Sperranschläge 16 wie die Drehrichtung des Sperrings 8 gegenüber dem Futterkörper 7 beim Spannen des Bohrfutters. Diese Drehrichtung ist in der Zeichnung jeweils durch den Pfeil 18. angedeutet. Die Zähne 19, 20 sowohl des Zahnkranzes 12 am Haltering 9 als auch der Gegenverzahnung 11 am Zahnring 15 besitzen Sägezahnform. Die Sägezähne sind dabei so ausgerichtet, daß in der dem Spannen des Bohrfutters entsprechenden Drehrichtung des Sperrings 8 (Pfeil 18) steile Zahnbrust 21 der Zähne 20 am Zahnring 15 voranläuft und die Zahnbrust der Zähne 19 am Haltering 9 nachläuft. Die schrägen Zahnrücken 22 aller Zähne 19, 20 sind so geneigt, daß beim Verdrehen des Sperrings 8 in der dem Spannen des Bohrfutters, also dem Pfeil 18. entgegen gesetzten Drehrichtung die Zähne 20 des Zahnrings 15 die Zähne 19 des Halterings 9 über die Zahnrücken 22 gegen die Kraft der Sperrfedern 13 aus dem Verzahnungseingriff herausdrücken. Außerdem ist zwischen dem Haltering 9 und dem Futterkörper 7 eine allgemein mit 23 bezeichnete Steuereinrichtung vorgesehen, durch die der Haltering 9 beim Verdrehen zwischen den Begrenzungsanschlägen 10.1, 10.2, 10.3 gegen die Kraft der Sperrfedern 13 verschoben werden kann. Diese Verschiebung erfolgt derart, daß der Haltering 9 in seinen beiden, jeweils das Ende seines maximal möglichen Verdrehungsweges bildenden Grenzstellungen (Anschläge 10.1, 10.2) aus dem Verzahnungseingriff an der Gegenverzahnung 11 gelöst ist. Dabei ist der maximal mögliche Verdrehungswinkel des Zahnrings 15 gegenüber dem Sperring 8 mindestens gleich demjenigen Drehwinkel, den der Haltering 9 in Bezug auf den Futterkörper 7 in der dem Spannen des Bohrfutters entgegen gesetzten Drehrichtung des Sperrings 8 ausführen muß, um den dem Nachspannen zugeordneten Verdrehungsweg 24 (Fig. 5) zu durchlaufen und anschließend noch von der Steuereinrichtung 23 aus dem Verzahnungseingriff gelöst zu werden.

Der Sperring 8 besitzt entsprechend der Anzahl seiner Sperranschläge 16 drei über den Ringumfang verteilte sektorförmige Ausnehmungen 25. In diesen Ausnehmungen 25 ist der Zahnring 15 mit drei entsprechenden sektorförmigen Vorsprüngen 26 geführt. Diese Vorsprünge 26 sind in Umfangsrichtung um den Verdrehungsweg des Zahnrings 15 gegenüber dem Sperring 8 kürzer als dessen Ausnehmungen 25. Jeweils eine der beiden in Umfangsrichtung stirnseitigen Endflächen jeder Ausnehmung 25 bildet den Sperranschlag 16 für den Vorsprung 26, und jeder Vorsprung 26 ist an seinem in Umfangsrichtung dem Sperranschlag 16 abgewandten Ende durch die diesem Sperranschlag 16 zugeordnete Rückstellfeder 17 gegen den Sperring 8 abgestützt, wobei jede Rückstellfeder 17 in einer Tasche 27 des ihr zugeordneten Vorsprungs 26 gehalten ist.

Die Steuereinrichtung 23 ist im wesentlichen von zwei Steuerkurven 30 am Haltering 9 und zwei fest am Futterkörper 7 sitzenden Tastköpfen 40 gebildet, die als sich diametral gegenüberliegende Nocken an einer Ringscheibe 41 ausgebildet sind, welche verdrehungsfest auf den Futterkörper 7 aufgeschoben ist. Die Tastköpfe 40 bewegen sich beim Verdrehen des Halterings 9 an den Steuerkurven entlang, die in drehsymmetrischer Ausbildung sich entsprechend diametral am Haltering 9 gegenüberliegen. Jede Steuerkurve 30 verfügt über einen der Nachspannbewegung zugeordneten, sich in Umfangsrichtung erstreckenden Kurvenabschnitt 31, dessen axiale Lage dadurch bestimmt ist, daß bei an diesem Kurvenabschnitt 31 anliegendem Tastkopf 40 der Haltering 9 sich im Verzahnungseingriff befindet. An diesen dem Nachspannen zugeordneten Kurvenabschnitt 31 schließt sich einenends, nämlich am in den Fig. 5a bis 5d rechten Ende der Nachspannungsbegrenzungsanschlag 10.2 und andernends, in den Fig. 5a bis 5d also am linken Ende, eine schräge Kurvenrampe 32 an. Bewegt sich der Tastkopf 40 beim Drehen des Halterings 9 entlang dieser Kurvenrampe 32, wird der Haltering 9 aus dem Verzahnungseingriff gelöst. Die Kurvenrampe 32 führt zu dem einen 10.1 der beiden, den maximal möglichen Verdrehungsweg des Halterings 9 gegenüber dem Futterkörper 7 beendenden Begrenzungsanschläge. Die axiale Höhe des Nachspannungsbegrenzungsanschlags 10.2 ist geringer als die gegenseitige Eingriffstiefe der Verzahnung 12 und der Gegenverzahnung 11, also axial niedriger als die Höhe der Zähne 19, 20. An den Nachspannungsbegrenzungsanschlag 10.2 schließt in den Fig. 5a bis 5d zur rechten Seite hin ein Kurvenflügel 33 der Steuerkurve 30 an, an dem der Haltering 9 vom Tastkopf 40 aus dem Verzahnungseingriff gelöst ist. An diesem Kurvenflügel 33 ist ein Rastsitz 34 für den Tastkopf 40 ausgebildet. An diesen Rastsitz 34 schließt der zweite 10.3 der den maximal möglichen Verdrehungsweg des Halterings 9 beendenden Begrenzungsanschläge an. Die Neigung der schrägen Kurvenrampe 32 der Steuerkurve 30 ist genügend steil, damit der ihr anliegende Tastkopf 40 die axiale Rückstellung des Halterings 9 unter der Kraft der Sperrfedern 13 in den Verzahnungseingriff nicht behindern kann.

Zusätzlich zu den von der Steuerkurve 30 gebildeten beiden, den maximal möglichen Verdrehungsweg des Halteringes 9 beendenden Begrenzungsanschlägen 10.1, 10.3 ist zwischen dem Haltering 9 und dem Futterkörper 7 eine weitere, den maximal möglichen Verdrehungsweg begrenzende Anschlageinrichtung vorgesehen. Sie besteht aus zwei sich zueinander und zur Futterachse parallel gegenüber stehenden Planflächen 50 am Futterkörper 7, die sich über den axialen Verschiebungsbereich des Halterings 9 erstrecken. Jeder dieser Planfläche 50 stehen zwei achsenparallele und zueinander schräge Planflächen 51, 52 am Haltering 9 gegenüber. Je nach Drehlage des Halterings 9 kommt die eine oder andere seiner beiden Planflächen 51, 52 an der ihnen zugeordneten Planfläche 50 des Futterkörpers 7 zur Anlage, so daß der Winkel zwischen den beiden Planflächen 51, 52 des Halterings 9 den maximal möglichen Verdrehungsweg zwischen dem Haltering 9 und dem Futterkörper 7 bestimmt.

Die Funktionsweise des Bohrfutters läßt sich wie folgt beschreiben:

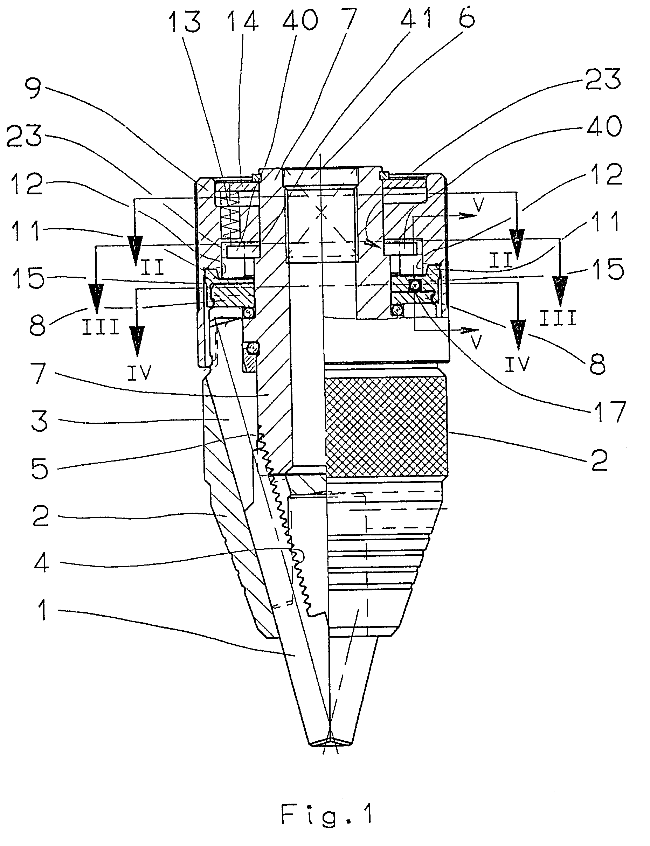

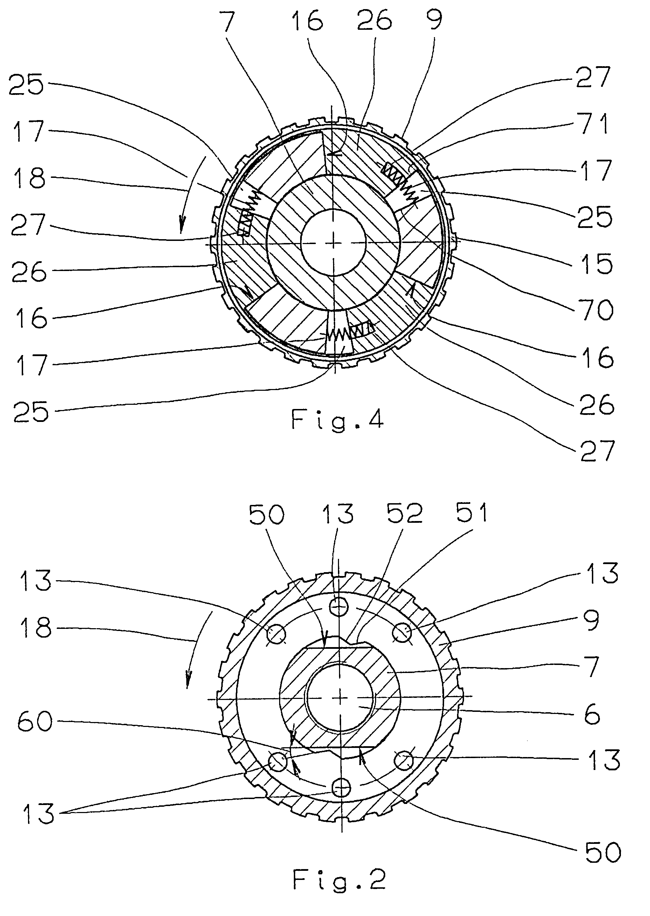

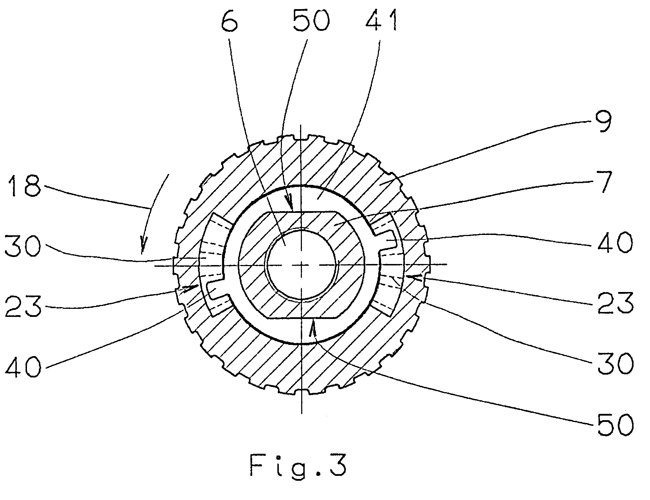

Der in den Fig. 1 bis 4 gezeigte Betriebszustand des Futters entspricht den in Fig. 5a gezeigten Verhältnissen. Befindet sich zwischen den Futterbacken 1 ein Bohrer und wird aus dem in Fig. 5a gezeigten Betriebszustand heraus das Backenführungsteil 3 und mit ihm der Sperring 8 in der dem Schließen des Bohrfutters entsprechenden Drehrichtung (Pfeil 18) gegenüber dem Futterkörper 7 gedreht, so wird spätestens dann, wenn die Futterbacken 1 am Bohrerschaft zur Anlage kommen, der Futterkörper 7 und damit sein Tastkopf 40 in dieser Drehrichtung (Pfeil 18) mitgenommen. Diese Verdrehung gegenüber dem festgehaltenen Haltering 9 ist möglich, weil sich der Sperring 8 gegen die Kraft der Rückstellfedern 17 gegenüber dem am Haltering 9 im Verzahnungseingriff befindenden und daher ebenfalls wie dieser festgehaltenen Zahnring 15 verdrehen kann. Die drehende Mitnahme des Futterkörpers 7 führt dazu, daß der Tastkopf 40 an der Kurvenrampe 32 nach links gleitet, wobei er den Haltering 9 aus dem Verzahnungseingriff löst und sich der Zahnring 15 unter der Kraft der Rückstellfedern 17 wieder in die in Fig. 5a gezeigte Ausgangslage zurückdrehen kann. Diesen Betriebszustand zeigt die Fig. 5c. In ihm liegt der Tastkopf 40 an dem von der Steuerkurve 30 gebildeten Begrenzungsanschlag 10.1, außerdem aber der Haltering 9 auch mit seiner Planfläche 51 an der zugeordneten Planfläche 50 des Futterkörpers, so daß der in Fig. 2 eingetragene Drehwinkel 60 demjenigen Drehwinkel entspricht, um den der Haltering 9 gegenüber dem Tastkopf 40 aus der Stellung gemäß Fig. 5a in die Stellung gemäß Fig. 5c verdreht worden ist. In diesem Betriebszustand kann nun durch Verdrehen des Sperrings 8 in Richtung des Pfeiles 16 bzw. Gegenhalten des Halteringes 9 in entgegen gesetzter Drehrichtung, das Bohrfutter mit dem maximalen Drehmoment gespannt werden, das von Hand auf den Backenführungsteil 2 einerseits und den Haltering 9 andererseits aufgebracht werden kann. Wird anschließend an diese Einspannung das Bohrfutter losgelassen, drücken die Sperrfedern 13 den Haltering 9 wieder axial in den Verzahnungseingriff, wobei der Haltering 9 mit seiner schrägen Kurvenrampe 32 am Tastkopf 40 abläuft und im Ergebnis wieder der in Fig. 5a gezeigte Zustand erreicht wird. Wird nun gebohrt, führt das Rückhaltemoment des Bohrers gegenüber dem Antriebsmoment der Bohrspindel, wiederum in Bezug auf den Futterkörper 7, zu einer Verdrehung des Backenführungsteils 2 und des Sperrings 8 in Richtung des Pfeiles 18. In derselben Richtung wird zunächst über die Rückstellfedern 17 der Zahnring 15 und von diesem über den Verzahnungseingriff der Haltering 9 mitgenommen, bis der Tastkopf 40 am Nachspannungsbegrenzungsanschlag 10.2 zur Anlage kommt. Das Backenführungsteil 2 und der Sperring 8 können nun unter Zusammendrücken der Rückstellfedern 17 noch eine weitere nachspannende Drehung ausführen, bis die den Sperranschlägen 16 in Umfangsrichtung jeweils gegenüber liegenden Stirnflächen 70 der Ausnehmungen 25 an den ihnen zugewandten Stirnflächen 71 der Vorsprünge 26 zur Anlage kommen. Ein weiterer Nachspannvorgang ist dann nicht mehr möglich. Diesen Betriebszustand zeigt die Fig. 5b. Soll nun das Bohrfutter gelöst werden, wird das Backenführungsteil 2 und mit ihm der Sperring 8 entgegen gesetzt dem Pfeil 18. gegenüber dem festgehaltenen Haltering 9 gedreht, und zwar zunächst soweit, bis die die Sperranschläge 16 bildenden Stirnflächen der Ausnehmungen 25 des Sperrings 8 an den ihnen gegenüber liegenden Stirnflächen der Vorsprünge 26 zur Anlage kommen. Bei der weiteren Verdrehung des Sperrings 8 entgegen dem Pfeil 18. wird nun der Zahnring 15 mitgenommen, so daß dessen schräge Zahnrücken 22 über die ihnen anliegenden Zahnrücken des Halterings 9 letzteren axial gegen die Kraft der Sperrfedern 13 zurückdrücken, bis der Verzahnungseingriff aufgehoben ist. Durch diese Verschiebung des Halterings 9 in Fig. 5b nach oben, ist der Tastkopf 40 axial nach unten vom Nachspannungsbegrenzungsanschlag 10.2 abgerutscht. Wird nun der Sperring 8 weiter entgegen dem Pfeil 18. gegenüber dem festgehaltenen Haltering 9 gedreht, wird der Futterkörper 7 und mit ihm der Tastkopf 40 im gleichen Drehsinn mitgenommen, so daß sich der Tastkopf 40 über die Kurvenschräge 35 in den Rastsitz 34 bewegt und den Haltering 9 in der aus dem Verzahnungseingriff gelösten Stellung festhält. Dieser Betriebszustand ist in Fig. 5d gezeigt. Das Futter ist in diesem Zustand offen. Der Futterkörper 7 ist durch den im Rastsitz 34 der Steuerkurve 30 befindlichen Tastkopf 40 gegen Verdrehungen gegenüber dem Haltering 9 gesichert. Das Backenführungsteil 2 kann somit gegenüber dem festgehaltenen Haltering 9 und dem entsprechend feststehenden Futterkörper 7 beliebig im Sinne eines Schließens oder Öffnens des Bohrfutters gedreht werden. Soll erneut ein Bohrer gespannt werden, wird er zwischen die Futterbacken 1 eingesetzt und bei festgehaltenem Haltering 9 das Backenführungsteil 2 mit dem Sperring 8, ausgehend vom Zustand gemäß Fig. 5d, in Richtung des Pfeiles 18. verdreht. Wieder wird dabei spätestens dann, wenn die Futterbacken 1 am Bohrerschaft zur Anlage kommen, der Futterkörper 7 und damit der Tastkopf 40 in der Drehrichtung des Pfeiles 18. mitgenommen, so daß der Tastkopf 40 aus dem Rastsitz 34 austritt, bis der Tastkopf 40 wieder an dem dem Nachspannweg zugeordneten Kurvenabschnitt 31 zur Anlage kommt. Gleichzeitig verschiebt sich dabei wieder der Haltering 9 unter der Kraft der Sperrfedern 13 in den Verzahnungseingriff am Zahnring 15. Die weitere Spannung des Bohrers erfolgt nun in der schon im Zusammenhang mit den Fig. 5a und 5c beschriebenen Weise. Daraus ist ersichtlich, daß der zwischen dem Sperring 9 und dem Zahnring 15 vorhandene freie Verdrehungsweg 75 mindestens so groß sein muß wie der Verdrehungsweg, den der Tastkopf 40 zwischen dem Nachspannungsbegrenzungsanschlag 10.2 und dem Begrenzungsanschlag 10.1 zurücklegen muß, um den Haltering 9 wieder in die in Fig. 5c gezeigte Stellung mit aufgehobenem Verzahnungseingriff verstellen zu können.

## Patentansprüche

1. Selbstspannendes Bohrfutter zum Betrieb an einer Schlagbohrspindel, mit Futterbacken (1) zum Einspannen eines Bohrwerkzeugs, einem die Futterbacken (1) geneigt zur Futterachse führenden Backenführungsteil (2), ferner mit einem ein Spanngewinde (5) zum Verstellen der Futterbacken (1) tragenden, an die Schlagbohrspindel anschließbaren Futterkörper (7), wobei das Backenführungsteil (2) drehbar am Futterkörper (7) geführt und drehfest mit einem gegenüber dem Futtekörper (7) axial unverschiebbaren Sperring (8) verbunden ist, und mit einem die Nachspannung begrenzenden, am Futterkörper (7) axial verschiebbar und zwischen Begrenzungsanschlägen (10.1, 10.2, 10.3) verdrehbar geführten Haltering (9), der mit einem Zahnkranz (12) unter der Kraft mindestens einer Sperrfeder (13) axial in eine auf Seiten des Sperrings (8) befindliche Gegenverzahnung (11) greift und durch axiales Verschieben gegen die Kraft der Sperrfeder (13) aus dem Verzahnungseingriff lösbar ist, dadurch gekennzeichnet, daß die Gegenverzahnung (11) an einem Zahnring (15) ausgebildet ist, der koaxial am Sperring (8) zwischen mindestens einem Sperranschlag (16) und einer dem Sperranschlag zugeordneten Rückstellfeder (17) begrenzt verdrehbar geführt ist, wobei die Rückstellfeder (17) den Zahnring (15) in derselben Drehrichtung gegen den Sperranschlag (16) drückt wie die des Sperrings (8) beim Spannen des Bohrfutters, daß die Zähne (19, 20) des Zahnkranzes (12) am Haltering (9) und der Gegenverzahnung (12) am Zahnring (15) Sägezahnform besitzen, wobei in der dem Spannen des Bohrfutters entsprechenden Drehrichtung des Sperrings (8) die steile Zahnbrust (21) der Zähne (20) am Zahnring (15) voran- und der Zähne (19) am Haltering (9) nachläuft und die schrägen Zahnrücken (22) so geneigt sind, daß beim Verdrehen des Sperrings (8) in der dem Spannen des Bohrfutters entgegengesetzten Drehrichtung die Zähne (20) des Zahnrings (15) die Zähne (19) des Halterings (9) über die Zahnrücken (22) gegen die Kraft der Sperrfeder (13) aus dem Verzahnungseingriff herausdrücken, und daß zwischen dem Haltering (9) und dem Futterkörper (7) eine Steuereinrichtung (23) vorgesehen ist, durch die der Haltering (9) beim Verdrehen zwischen den Begrenzungsanschlägen (10.1, 10.2, 10.3) gegen die Kraft der Sperrfeder (13) axial verschiebbar ist, wobei in seinen beiden, das Ende seines maximal möglichen Verdrehungsweges bildenden Grenzstellungen der Haltering (9) aus dem Verzahnungseingriff an der Gegenverzahnung (11) gelöst ist, und wobei der maximal mögliche Verdrehungswinkel des Zahnrings (15) gegenüber dem Sperring (8) mindestens gleich dem Drehwinkel ist, den der Haltering (9) in Bezug auf den Futterkörper (7) in der dem Spannen des Bohrfutters entgegengesetzten Drehrichtung des Sperrings (8) ausführen muß, um den dem Nachspannen zugeordneten Verdrehungsweg zu durchlaufen und anschließend noch von der Steuereinrichtung (23) aus dem Verzahnungseingriff gelöst zu werden.

2. Bohrfutter nach Anspruch 1, dadurch gekennzeichnet, daß der Sperring (8) mehrere über den Ringumfang verteilt sektorförmige Ausnehmungen (25) aufweist, in welchen der Zahnring (15) mit entsprechenden sektorförmigen Vorsprüngen (26) geführt ist, die in Umfangsrichtung um den Verdrehungsweg des Zahnrings (15) gegenüber dem Sperring (8) kürzer als dessen Ausnehmungen (25) sind, wobei jeweils eine der beiden in Umfangsrichtung stirnseitigen Endflächen jeder Ausnehmung (25) den Sperranschlag (16) für den Vorsprung (26) bildet und dieser am in Umfangsrichtung gegenüberliegenden Ende durch die dem Sperranschlag (16) zugeordnete Rückstellfeder (17) gegen den Sperring (8) abgestützt ist.

3. Bohrfutter nach Anspruch 1 oder 2, dadurch gekennzeichnet, daß die Steuereinrichtung (23) von mindestens einer Steuerkurve (30) am Haltering (9) und mindestens einem beim Verdrehen des Halterings an der Steuerkurve (30) sich entlang bewegenden, fest am Futterkörper (7) sitzenden Tastkopf (40) gebildet ist, wobei die Steuerkurve (30) einen der Nachsspannbewegung zugeordneten, sich in Umfangsrichtung erstreckenden, dem Haltering (9) den Verzahnungseingriff ermöglichenden Kurvenabschnitt (31) aufweist, an den sich einenends ein Nachspannungsbegrenzungsanschlag (10.2) nd andernends eine schräge Kurvenrampe (32) anschließt, an der der Haltering (9) vom Tastkopf (40) aus dem Veriegelungseingriff gelöst wird und die zu einem 10.1 der beiden Begrenzungsanschläge führt, welche den maximal möglichen Verdrehungsweg des Halterings (9) gegenüber dem Futterkörper (7) beenden.

4. Bohrfutter nach Anspruch 3, dadurch gekennzeichnet, daß die axiale Höhe des Nachspannungsbegrenzungsanschlags (10.2) geringer als die gegenseitige Eingrifftiefe der Verzahnung 12 und der Gegenverzahnung ist, und daß an den Nachspannungsbegrenzungsanschlag (10.2) ein Kurvenflügel (33) der Steuerkurve (30) anschließt, an dem der Haltering (9) vom Tastkopf (40) aus dem Verzahnungseingriff gelöst und ein Rastsitz (34) für den Tastkopf (40) ausgebildet ist, wobei an diesen Rastsitz (34) der zweite 10.3 der den maximal möen Verdrehungsweg des Halterings (9) beendenden Begrenzungsanschläge anschließt.

5. Bohrfutter nach Anspruch 3 oder 4, dadurch gekennzeichnet, daß anstelle der von der Steuerkurve (30) gebildeten beiden, den maximal möglichen Verdrehungsweg des Halterings (9) beendenden Begrenzungsanschläge (10.1, 10.3) oder zusätzlich zu ihnen eine weitere Anschlageinrichtung zwischen dem Haltering (9) und dem Futterkörper (7) vorgesehen ist, bestehend aus mindestens einer achsenparallelen Planfläche (50) am Futterkörper (7) und je zwei ihr gegenüberstehenden achsenparallelen und zueinander schrägen Planflächen (51, 52) am Haltering (9), wobei je nach Drehlage der Haltering (9) mit einer seiner beiden Planflächen (51, 52) an der Planfläche (50) des Futterkörpers (7) zur Anlage kommt und der Winkel (60) zwischen den beiden Planflächen (51, 52) des Halterings (9) den maximal möglichen Verdrehungsweg zwischen dem Haltering (9) und dem Futterkörper (7) bestimmt.

6. Bohrfutter nach einem der Ansprüche 3 bis 5, dadurch gekennzeichnet, daß die Neigung der schrägen Kurvenrampe (32) der Steuerkurve (30) genügend steil ist, damit der ihr anliegende Tastkopf (40) die Rückstellung des Halterings (9) unter der Kraft der Sperrfeder (13) in den Verzahnungseingriff nicht behindern kann.

7. Bohrfutter nach einem der Ansprüche 3 bis 6, dadurch gekennzeichnet, daß der Tastkopf (40) als radial abstehender Nocken an einer verdrehungssicher auf den Futterkörper (7) aufgeschobenen Ringscheibe (41) ausgebildet ist.

## Claims

1. A self-tightening drilling chuck for operation on a hammer drilling spindle, having chuck jaws (1) for gripping a drilling tool, a jaw guide portion (2) which guides the chuck jaws (1) inclinedly with respect to the axis of the chuck, further having a chuck body (7) which can be connected to the hammer drilling spindle and which carries a tightening screwthread (5) for displacement of the chuck jaws (1), wherein the jaw guide portion (2) is rotatably guided on the chuck body (7) and is non-rotatably connected to a locking ring (8) which is axially non-displaceable with respect to the chuck body (7), and having a holding ring (9) which limits the re-tightening action and which is guided on the chuck body (7) axially displaceably and rotatably between limiting abutments (10.1, 10.2, 10.3) and which engages with a ring of teeth (12) under the force of at least one locking spring (13) axially into a counterpart tooth arrangement (11) on the part of the locking ring (8) and is releasable from the tooth engagement by axial displacement against the force of the locking spring (13), characterised in that the counterpart tooth arrangement (11) is formed on a toothed ring (15) which is limitedly rotatably guided coaxially on the locking ring (8) between at least one locking abutment (16) and a return spring (17) associated with the locking abutment, wherein the return spring (17) urges the toothed ring (15) against the locking abutment (16) in the same direction of rotation as that of the locking ring (8) upon tightening of the drilling chuck, that the teeth (19, 20) of the ring of teeth (12) on the holding ring (9) and the counterpart tooth configuration (11) on the toothed ring (15) are of a sawtooth shape, wherein in the direction of rotation of the locking ring (8) corresponding to tightening Of the drilling chuck the steep tooth face (21) of the teeth (20) on the toothed ring (15) leads and that of the teeth (19) on the holding ring (9) trails and the sloping tooth backs (22) are so inclined that upon rotation of the locking ring (8) in the direction of rotation opposite to tightening of the drilling chuck the teeth (20) of the toothed ring (15) urge the teeth (19) of the holding ring (9) out of the tooth arrangement engagement by way of the tooth backs (22) against the force of the locking spring (13), and that provided between the holding ring (9) and the chuck body (7) is a control device (23) by which the holding ring (9) is axially displaceable upon rotation between the limiting abutments (10.1, 10.2, 10.3) against the force of the locking spring (13), wherein in its two limit positions forming the end of its maximum possible rotational travel the holding ring (9) is released from the tooth engagement on the counterpart tooth arrangement (11) and wherein the maximum possible angle of rotational movement of the toothed ring (15) relative to the locking ring (8) is at least equal to the rotary angle that the holding ring (9) must cover in relation to the chuck body (7) in the direction of rotation of the locking ring (8) opposite to tightening of the drilling chuck in order to cover the rotational travel associated with the re-tightening effect and then also to be released from the tooth engagement by the control device (23).

2. A drilling chuck according to claim 1 characterised in that the locking ring (8) has a plurality of sector-shaped recesses (25) which are distributed over the periphery of the ring and in which the toothed ring (15) is guided with corresponding sector-shaped projections (26) which are shorter than the recesses (25) of the locking ring (8) in the peripheral direction by the rotational travel of the toothed ring (15) with respect to the locking ring (8), wherein a respective one of the two end surfaces of each recess (25), which are at the end in the peripheral direction, forms the locking abutment (16) for the projection (26) and same is supported at the opposite end in the peripheral direction in relation to the locking ring (8) by the return spring (17) associated with the locking abutment (16).

3. A drilling chuck according to claim 1 or claim 2 characterised in that the control device (23) is formed by at least one control cam (30) on the holding ring (9) and at least one follower head (40) which is fixedly carried on the chuck body (7) and which moves along the control cam (30) when the holding ring rotates, wherein the control cam (30) has a cam portion (31) which is associated with the re-tightening movement and which extends in the peripheral direction and which permits tooth engagement for the holding ring (9) and which is adjoined at one end by a re-tightening limiting abutment (10.2) and at the other end by an inclined cam ramp (32) at which the holding ring (9) is released from the locking engagement by the follower head (40) and which leads to one (10.1) of the two limiting abutments which terminate the maximum possible rotational travel of the holding ring (9) with respect to the chuck body (7).

4. A drilling chuck according to claim 3 characterised in that the axial height of the re-tightening limiting abutment (10.2) is less than the mutual depth of engagement of the tooth arrangement (12) and the counterpart tooth arrangement, and that adjoining the re-tightening limiting abutment (10.2) is a cam lobe (33) of the control cam (30) at which the holding ring (9) is released from the tooth engagement by the follower head (40) and a retaining seat (34) for the follower head (40) is provided, wherein adjoining said retaining seat (34) is the second (10.3) of the limiting abutments which terminate the maximum possible rotational movement of the holding ring (9).

5. A drilling chuck according to claim 3 or claim 4 characterised in that instead of or in addition to the two limiting abutments (10.1, 10.3) which are formed by the control cam (30) and which terminate the maximum possible rotational travel of the holding ring (9) there is provided a further abutment means between the holding ring (9) and the chuck body (7), comprising at least one planar surface (50) in parallel relationship with the axis on the chuck body (7) and two respective planar surfaces (51, 52) on the holding ring (9), which are disposed in opposite relationship to said planar surface (50) and which are in parallel relationship with the axis and which are inclined relative to each other, wherein depending on the respective rotational position the holding ring (9) comes to bear with one of its two planar surfaces (51, 52) against the planar surface (50) of the chuck body (7) and the angle (60) between the two planar surfaces (51, 52) of the holding ring (9) determines the maximum possible rotational travel between the holding ring (9) and the chuck body (7).

6. A drilling chuck according to one of claims 3 to 5 characterised in that the inclination of the sloping cam ramp (32) of the control cam (30) is sufficiently steep that the follower head (40) bearing thereagainst cannot prevent the return of the holding ring (9) under the force of the locking spring (13) into the tooth engagement.

7. A drilling chuck according to one of claims 3 to 6 characterised in that the follower head (40) is in the form of a radially projecting protrusion on an annular disc (41) which is fitted on to the chuck body (7) non-rotatably thereon.

## Revendications

1. Mandrin de perçage autoserrant destiné à être monté sur une broche de perceuse à rotation-percussion, avec des mors (1) pour le serrage d'un outil de perçage, avec un élément de guidage de mors (2) qui assure le guidage des mors (1) dans une direction inclinée par rapport a l'axe du mandrin, avec un corps de mandrin (7) pourvu d'un filetage de serrage (5) aux fins de déplacer les mors (1), qui peut être lié à la broche de perceuse, l'élément de guidage des mors (2) étant guidé en rotation sur le corps de mandrin (7) et étant solidaire en rotation d'une bague de verrouillage (8) elle-même fixe en translation dans la direction axiale par rapport au corps de mandrin (7), avec une bague de blocage (9) limitant le post-serrage qui est montée sur le corps de mandrin (7) avec possibilité de coulissement dans la direction axiale et possibilité de rotation entre deux butées de limitation (10.1, 10.2, 10.3) et qui, par une couronne dentée (12) vient en prise axialement, sous la force d'au moins un ressort de verrouillage (13), avec une denture conjuguée (11) côté bague de verrouillage (8) et peut être amenée hors de prise par coulissement axial à l'encontre de la force du ressort de verrouillage (13), caractérisé par le fait que la denture conjuguée (11) est aménagée sur une bague dentée (15) qui est guidée coaxialement sur la bague de verrouillage (8) avec possibilité de rotation limitée entre une butée de verrouillage (16) et un ressort de rappel (17) associé à la butée de verrouillage (16), le ressort de rappel (17) repoussant la bague dentée (15) contre la butée de verrouillage (16) dans la même direction de rotation que la direction de rotation de la bague de verrouillage (8) pour le serrage du mandrin, par le fait que les dents (19, 20) de la couronne dentée (12) sur la bague de blocage (9) et de la denture conjuguée (12) sur la bague dentée (15) ont une forme de dent de scie, le flanc raide (21) des dents (20) de la bague dentée (15) étant menant et le flanc raide des dents (19) sur la bague de blocage (9) étant mené dans la direction de rotation de la bague de verrouillage correspondant au serrage du mandrin, et les flancs arrières inclinés (22) présentant une inclinaison telle que, lors de la rotation la bague de verrouillage (8) dans la direction opposée au serrage, les dents (20) de la bague dentée (15) repoussent hors de prise les dents (19) de la bague de blocage (9) par le biais des flancs de dents (22), à l'encontre de la force du ressort de verrouillage (13) et par le fait qu'il est prévu entre la bague de blocage (9) et le corps de mandrin (7) un dispositif de commande (23), à l'aide duquel la bague de blocage (9), lors de la rotation entre les butées de limitation (10.1, 10.2, 10.3), peut être déplacée axialement à l'encontre de la force du ressort de verrouillage (13), la bague de blocage (9), dans ses deux positions limites qui constituent les limites de sa course maximale possible, étant amenée hors de prise avec la denture conjuguée (11) et l'angle de rotation maximal possible de la bague dentée (15) par rapport à la bague de verrouillage (8) étant au moins égal à la rotation que doit effectuer la bague de blocage (9) par rapport au corps de mandrin (7), dans la direction de rotation de la bague de verrouillage (8) opposée au serrage du mandrin, pour la course de post-serrage et être ensuite amenée hors de prise par le dispositif de commande (23).

2. Mandrin de perçage selon la revendication 1, caractérisé par le fait que la bague de verrouillage (8) présente plusieurs évidements (25) en forme de secteurs répartis sur le pourtour de la bague, dans lesquels la bague dentée (15) est guidée par l'intermédiaire de saillies (26) adaptées en forme de secteurs qui, dans la direction circonférentielle, sont plus courts que les évidements (25) d'une valeur qui correspond à la course de rotation de la bague dentée (15) par rapport à la bague de verrouillage (8), l'une des deux faces d'extrémité côté frontal de chaque évidement (25) formant la butée de verrouillage (16) pour la saillie (26) et celle-ci étant maintenue en appui, au niveau de son extrémité opposée dans la direction circonférentielle, sur la bague de verrouillage (8) par le ressort de rappel (17) associé à la butée de verrouillage (16).

3. Mandrin de perçage selon la revendication 1 ou 2, caractérisé par le fait que le dispositif de commande (23) est formé d'au moins un profil de commande (30) sur la bague de blocage (9) et d'au moins une tête de palpage (40) solidaire du corps de mandrin (7) qui se déplace le long du profil de commande (30) lors de la rotation de la bague de blocage, le profil de commande (30) comportant un tronçon (31) associé au mouvement de post-serrage qui s'étend dans la direction périphérique et permet à la bague de blocage (9) de venir en prise, auquel se raccordent d'un côté une butée de limitation de post-serrage (10.2) et de l'autre une rampe inclinée (32) au niveau de laquelle la bague de blocage (9) est amenée hors de prise par la tête de palpage (40) et qui mine à l'une (10.1) des deux butées de limitation limitant la course de rotation maximale possible de la bague de blocage (9) par rapport au corps de mandrin (7).

4. Mandrin de perçage selon la revendication 3, caractérisé par le fait que la hauteur axiale de la butée de limitation de post-serrage (10.21) est inférieure à la profondeur d'engagement mutuel de la denture (12) et de la denture conjuguée et par le fait que derrière la butée de limitation de serrage (10.2) se trouve un tronçon (33) du profil de commande (30) au niveau duquel la bague de blocage (9) est amenée hors de prise par la tête de palpage (40) et un siège d'encliquetage (34) est aménagé pour la tête de palpage (40), la deuxième (10.3) des butées de limitation qui limitent la course maximale de rotation de la bague de blocage (9) étant située derrière ledit siège d'encliquetage (34).

5. Mandrin de perçage selon la revendication 3 ou 4, caractérisé par le fait qu'il est prévu à la place des deux butées de limitation (10.1. 10.3) limitant la course de rotation maximale possible de la bague de blocage (9) ou en plus de celles-ci, un dispositif de butée supplémentaire entre la bague de blocage (9) et le corps de mandrin (7), lequel dispositif de butée se compose d'au moins une surface plane (50) parallèle à l'axe sur le corps de mandrin (7) et de deux surfaces planes (51, 52) parallèles à l'axe disposées en vis-à-vis, qui sont inclinées l'une par rapport à l'autre, sur la bague de blocage (9), selon position angulaire la bague de blocage (9) venant en appui par l'une de ses deux surfaces planes (51,52) sur la surface plane (50) du corps de mandrin (7) et l'angle (60) entre les deux surfaces planes (51, 52) de la bague de blocage (9) déterminant la course de rotation maximale possible entre la bague de blocage (9) et le corps de mandrin (7).

6. Mandrin de perçage selon une des revendications 3 à 5, caractérisé par le fait que la pente de la rampe (32) inclinée du profil de commande (30) est suffisamment raide pour que la tête de palpage (40) reposant sur celle-ci ne puisse pas empêcher le rappel dans la position en prise de la bague de blocage (9) sous l'action de la force du ressort de verrouillage (13).

7. Mandrin de perçage selon une des revendications 3 à 6, caractérisé par le fait que la tête de palpage (40) est conformée en doigt qui fait saillie radialement sur un disque (41) monté fixe en rotation sur le corps de mandrin (7).
